# FASCICULE DE BREVET EUROPEEN

(11) **EP 1 792 153 B1**
(45) Date de publication et mention de la délivrance du brevet: **04.01.2012**
(21) Numéro de dépôt: 04787364.1
(22) Date de dépôt: 13.09.2004
(51) Int. Cl.: G01K 7/22

(54) **CAPTEUR HAUTE TEMPERATURE A RESPIRATION**
HOCHTEMPERATUR-RESPIRATIONSSENSOR
HIGH-TEMPERATURE RESPIRATION SENSOR

(43) Date de publication de la demande: 06.06.2007
(73) Titulaire: SC2N, 78180 Montigny-le-Bretonneux (FR)
(72) Inventeur: ROBIC, Jean-Pierre, F-14000 Caen (FR); WITTEMBERG, Vincent, F-14123 Ifs (FR)
(74) Mandataire: Cardon, Nicolas
(86) Numéro de dépôt international: PCT/FR2004/002318
(87) Numéro de publication internationale: WO 2006/030074

(56) Documents cités:
- GB-A- 847 773
- JP-A- 56 114 732
- US-B1- 6 305 841
- US-B1- 6 466 123
- US-B2- 6 712 507

## Description

La présente invention concerne le domaine des capteurs de température.

La présente invention concerne plus précisément un capteur de température, notamment conçu pour pouvoir mesurer des températures élevées (>700°C par exemple).

La présente invention s'applique en particulier aux capteurs de température adaptés pour mesurer la température de gaz d'échappement d'un moteur de véhicule automobile.

Les capteurs généralement utilisés pour la mesure de températures élevées sont constitués principalement par un tube métallique fermé dans lequel est placé un élément thermo-sensible. Le plus souvent l'élément thermo-sensible est de type thermistance à coefficient de température négatif. L'ensemble du capteur est hermétiquement fermé.

On trouvera des exemples de capteurs de température connus dans les documents FR-A-2822231 et FR-02 14940.

Les thermistances à coefficient de température négatif sont généralement constituées par une céramique semi-conductrice d'oxydes métalliques. Or lorsque le capteur est soumis à des températures élevées, généralement le tube métallique s'oxyde. Le tube étant hermétiquement fermé, l'atmosphère interne du capteur devient alors réductrice. Dans une telle atmosphère, lorsque la pression partielle d'oxygène diminue, les atomes d'oxygène contenus dans la céramique de la thermistance ont tendance à migrer vers cette atmosphère pour contribuer à l'oxydation du tube métallique et chercher à rééquilibrer la pression partielle d'oxygène. Ainsi, les caractéristiques de la céramique sont modifiées et la résistance de la thermistance dérive en augmentant rapidement dans le temps.

Pour ce qui concerne maintenant les thermistances à coefficient de température positif, elles sont généralement constituées par un matériau métallique, telle une résistance de platine. Or, l'atmosphère réductrice dégrade ce matériau et la résistance de la thermistance dérive en rapidement dans le temps.

Par conséquent, quel que soit le type de thermistance utilisé, l'oxydation du métal utilisé pour constituer le capteur, provoque une dérive de la valeur de la résistance électrique de l'élément sensible.

On connaît des capteurs de température qui permettent de s'affranchir dans une certaine mesure des problèmes précités, et ces capteurs ont déjà rendu de grands services.

Cependant les inventeurs ont déterminé que ces capteurs présentent la problématique suivante.

L'utilisation d'aciers dits "haute-température" ou « réfractaire » permet de limiter ce phénomène d'oxydation, mais principalement à partir du moment où une première couche d'oxyde se formant à la surface de l'acier limite l'oxydation ultérieure.

Ainsi, une solution classique est d'oxyder le tube métallique préalablement par traitement thermique ou chimique.

Mais ceci n'est pas une solution industrielle très économique, et ne garantit pas de l'oxydation ultérieure pouvant survenir, par exemple, lorsque la première couche d'oxyde à la surface du matériau se décolle sous l'effet de vibrations lors de l'utilisation. US 6305 841, divulgue un capteur de température selon le préambule de la revendication 1.

L'objet de la présente invention est donc d'obtenir un capteur de température dont les caractéristiques de la résistance en fonction de la température ne varient pas dans le temps.

Pour arriver à cette fin, invention propose un capteur de température selon la revendication 1.

Certains aspects préférés mais non limitatifs de ce capteur sont les suivants :
- le moyen d'échange possède une étanchéité vis-à-vis d'éléments visés,
- le moyen d'échange possède une étanchéité vis-à-vis des fluides,
- le moyen d'échange est placé au niveau du tube métallique,
- le moyen d'échange est placé au niveau d'un composant du capteur différent du tube métallique, ce composant étant tel qu'il permet ledit échange entre l'intérieur et l'extérieur dudit tube métallique,
- le moyen d'échange est un orifice muni d'un élément filtrant.

Ainsi, le capteur de l'invention permet l'échange d'air entre l'intérieur et l'extérieur du capteur, tout en assurant une étanchéité vis-à-vis des fluides non désirés, telle l'eau par exemple, de sorte que la pression partielle d'oxygène interne du tube métallique est avantageusement équilibrée, constante, et égale à celle de l'atmosphère extérieure, c'est-à-dire à celle de l'air ambiant.

D'autres aspects, buts et avantages de la présente invention apparaîtront mieux à la lecture de la description détaillée suivante de plusieurs formes de réalisation préférée de celle-ci, donnée à titre d'exemple non limitatif et faite en référence aux dessins annexés, sur lequel :
- la figure 1 illustre en coupe une première forme de réalisation du capteur selon l'invention,
- la figure 2 montre en coupe des agencements possibles du filtre avec l'orifice.
- la figure 3 illustre en coupe un mode de réalisation du capteur dans lequel le moyen d'échange se trouve au niveau d'un composant différent du tube métallique.

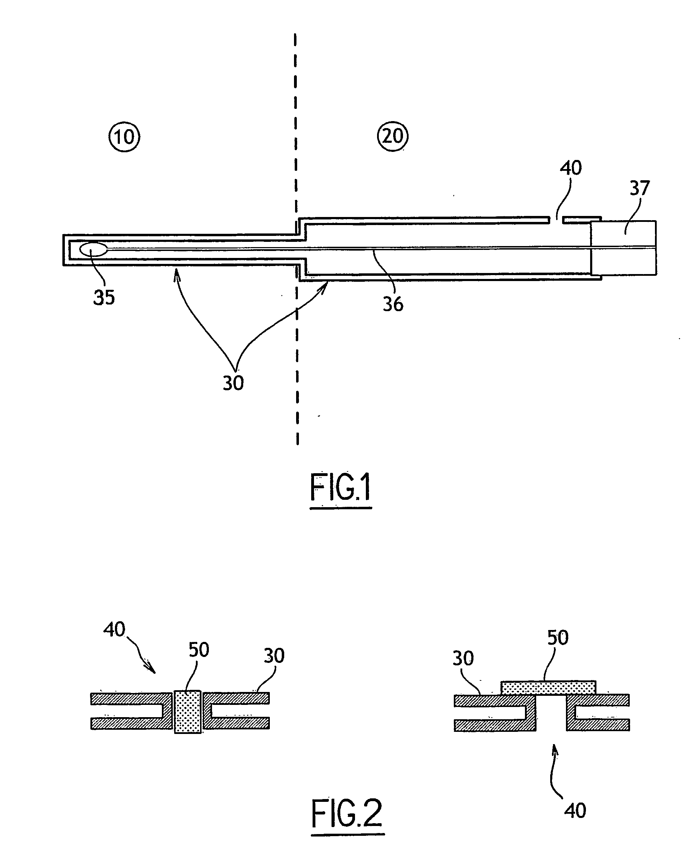

En se référant maintenant à la figure 1, on présente une première forme de réalisation d'un capteur haute température selon l'invention.

Un tel capteur comporte un tube métallique 30 logeant une thermistance 35 reliée à l'extérieur par deux fils conducteur 36 au moyen desquels on effectue une mesure de résistivité.

Par ailleurs, au niveau de l'extrémité distale de la thermistance, le bout du tube métallique est bouché par un connecteur 37 au travers duquel passent les deux fils 36 pour atteindre l'extérieur.

Un première partie du capteur est immergée dans une zone 10 où la température est à mesurer, dite zone à atmosphère haute température.

Typiquement, dans le cas d'une utilisation du capteur dans un véhicule automobile, cette zone 10 correspond à la zone où circulent les gaz d'échappement.

La deuxième partie du capteur se trouve dans une zone 20, dite atmosphère ambiante, où la température est moins élevée que dans la zone 10.

Selon la présente invention, on cherche à permettre un échange entre l'intérieur et l'extérieur du tube métallique 30, formant partie du capteur.

Dans l'exemple de l'utilisation du capteur dans un véhicule automobile, il n'est pas judicieux de permettre ledit échange entre l'intérieur du tube et l'atmosphère à haute température, car dans ce cas cette atmosphère comprend notamment des gaz d'échappement dont la pression partielle d'oxygène est très faible.

On place donc le moyen d'échange 40 d'air dans la zone 20 où se trouve l'atmosphère ambiante.

Dans la forme de réalisation présentée sur cette figure le moyen d'échange 40 est placé directement sur le tube 30.

Par ailleurs, le moyen d'échange 40 entendu dans cette invention est tout moyen permettant un passage d'air, comme par exemple un orifice 40 traversant de toute forme : cylindrique, ovale, anneau, parallélépipède, etc... mais ce n'est pas exhaustif.

Un tel moyen d'échange permet d'empêcher la dérive de la résistance électrique de la thermistance due à l'oxydation du tube métallique.

Toutefois, dans l'exemple mentionné ci-dessus, la mise en place d'un moyen d'échange aussi simple n'est pas compatible avec certaines contraintes qui veulent que le capteur soit étanche aux divers fluides visqueux tels l'eau et l'huile.

En effet, la présence d'un ou plusieurs de ces fluides à l'intérieur du capteur peut provoquer des dégradations sur la fonctionnalité du capteur.

Selon l'invention, ce problème est résolu en rendant l'orifice étanche vis-à-vis d'éléments visés, tels les fluides mentionnés plus haut.

Ainsi, le moyen d'échange consiste en un orifice muni d'un élément filtrant 50 (voir figure 2).

L'élément filtrant 50 est un matériau spécifique laissant passer l'air à travers le tube métallique, mais empêchant les fluides visés de passer.

Ce matériau est typiquement un matériau poreux avec des propriétés hydrophobes et/ou oléophobes.

Par exemple, on peut utiliser des matériaux à base de polytétrafluoroéthylène (PTFE) expansé ou non.

Comme représenté sur la figure 2, l'orifice et le filtre peuvent être agencés de différentes manières.

Le filtre peut être placé dans l'orifice.

Il peut aussi recouvrir une extrémité de ce dernier, à savoir se trouver sur ou sous l'orifice.

Dans une variante, non représentée sur les figures, on peut également disposer une pièce intermédiaire entre le tube 30 et le filtre 50.

Par ailleurs, l'orifice peut être placé au niveau d'un composant du capteur différent du tube métallique 30.

On s'assurera simplement qu'un passage d'air existe entre ce composant et l'intérieur du tube 30 pour permettre les échanges avec l'extérieur du tube.

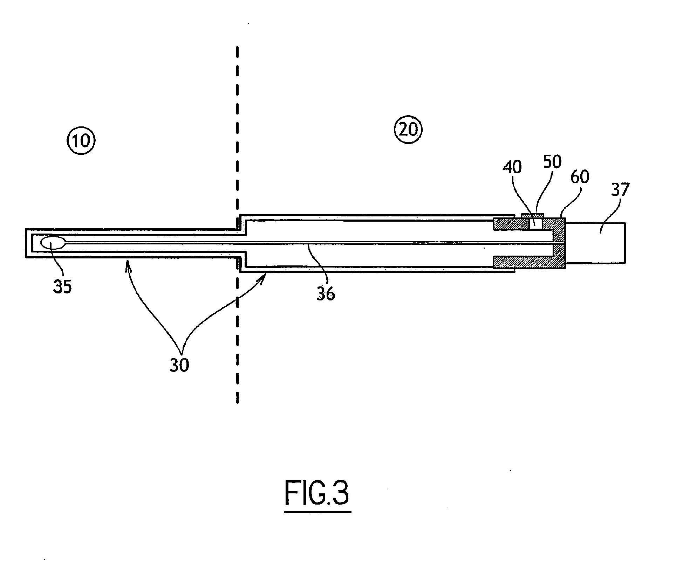

On a ainsi illustré à titre non limitatif une deuxième forme de réalisation du capteur selon l'invention sur la figure 3.

Le composant 60 est ici une pièce intermédiaire solidaire du tube métallique et disposé à son extrémité longitudinale dans la zone 20.

Cette pièce intermédiaire 60 partage avec le tube 30 l'air qui se trouve à l'intérieur.

L'orifice est recouvert à l'extérieur par le filtre 50 et il est disposé au niveau de cette pièce 60 de sorte que l'air est échangé entre l'intérieur et l'extérieur du tube 30 par l'intermédiaire de ladite pièce 60.

Bien entendu la présente invention n'est pas limitée au mode de réalisation particulier qui vient d'être décrit mais s'étend à toute variante conforme à son esprit.

## Revendications

1. Capteur de température pour la mesure de température, élevées sur véhicules automobiles, comprenant un tube métallique. (30) qui loge une thermistance (35), le capteur comprenant une première partie apte à être immergée dans une zone dans laquelle circulent des gaz d'échappement et une deuxième partie apte à être immergée dans l'atmosphère ambiante,
le capteur possédant en outre un moyen d'échange (40) d'air entre l'intérieur et l'extérieur du tube métallique,
la capteur étant **caractérisé par le fait que** ledit moyen d'échange (40) d'air est disposé dans la deuxième partie du capteur et qu'il est étanche à l'eau.

2. Capteur selon la revendication 1, le moyen d'échange (40) d'air étant étanche à l'huile.

3. Capteur selon la revendication 1 ou 2, le moyen d'échange (40) étant placé au niveau du tube métallique (30).

4. Capteur selon la revendication 1 ou 2, le moyen d'échange (40) étant placé au niveau d'un composant (60) du capteur différent du tube métallique (30), ce composant (60) étant tel qu'il permet ledit échange entre l'intérieur et l'extérieur du tube métallique (30).

5. Capteur selon l'une quelconque des revendications précédentes, le moyen d'échange (40) étant un orifice muni d'un élément filtrant (50).

6. Capteur selon la revendication 3, l'élément filtrant (50) se trouvant dans l'orifice.

7. Capteur selon la revendication 5, l'élément filtrant (50) recouvrant une extrémité de l'orifice.

8. Capteur selon l'une des revendications 5 à 7, l'élément filtrant (50) étant en matériau poreux.

9. Capteur selon l'une des revendications 5 à 8, l'élément filtrant (50) possédant des propriétés hydrophobes.

10. Capteur selon l'une quelconque des revendications 5 à 9, l'élément filtrant (50) possédant des propriétés oléophobes.

11. Capteur selon l'une quelconque des revendications 6 à 10, l'élément filtrant (50) étant un matériau à base de polytétrafluoroéthylène (PTFE).

## Claims

1. Temperature sensor for measuring high temperatures on motor vehicles, comprising a metal tube (30) which houses a thermistor (35), the sensor comprising a first part that can be immersed in a region in which exhaust gases circulate and a second part which can be immersed in the ambient atmosphere, the sensor also having a means (40) for exchanging air between the interior and the exterior of the metal tube,
the sensor being **characterized in that** said air exchange means (40) is positioned in the second part of the sensor and that it is watertight.

2. Sensor according to Claim 1, the air exchange means (40) being oil-tight.

3. Sensor according to Claim 1 or 2, the exchange means (40) being placed at the level of the metal tube (30).

4. Sensor according to Claim 1 or 2, the exchange means (40) being placed at the level of a component (60) of the sensor different from the metal tube (30), this component (60) being such that it allows for said exchange between the interior and the exterior of the metal tube (30).

5. Sensor according to any one of the preceding claims, the exchange means (40) being an orifice provided with a filtering element (50).

6. Sensor according to Claim 5, the filtering element (50) being located inside the orifice.

7. Sensor according to Claim 5, the filtering element (50) covering one end of the orifice.

8. Sensor according to one of Claims 5 to 7, the filtering element (50) being made of porous material.

9. Sensor according to one of Claims 5 to 8, the filtering element (50) having hydrophobic properties.

10. Sensor according to any one of Claims 5 to 9, the filtering element (50) having oleophobic properties.

11. Sensor according to any one of Claims 6 to 10, the filtering element (50) being a material based on polytetrafluoroethylene (PTFE).

## Patentansprüche

1. Temperaturfühler zur Messung hoher Temperaturen bei Kraftfahrzeugen, der ein Metallrohr (30) enthält, in dem ein Thermistor (35) untergebracht ist, wobei der Fühler einen ersten Teil, der in eine Zone eingetaucht werden kann, in der Abgase zirkulieren, und einen zweiten Teil enthält, der in die Umgebungsluft eingetaucht werden kann, wobei der Fühler außerdem eine Luftaustauscheinrichtung (40) zwischen der Innenseite und der Außenseite des Metallrohrs besitzt,
wobei der Fühler **dadurch gekennzeichnet ist, dass** die Luftaustauscheinrichtung (40) im zweiten Teil des Fühlers angeordnet ist, und dass sie wasserdicht ist.

2. Fühler nach Anspruch 1, wobei die Luftaustauscheinrichtung (40) öldicht ist.

3. Fühler nach Anspruch 1 oder 2, wobei die Austauscheinrichtung (40) im Bereich des Metallrohrs (30) angeordnet ist.

4. Fühler nach Anspruch 1 oder 2, wobei die Austauscheinrichtung (40) im Bereich eines Bauteils (60) des Fühlers angeordnet ist, das sich vom Metallrohr (30) unterscheidet, wobei dieses Bauteil (60) derart ist, dass es den Austausch zwischen der Innenseite und der Außenseite des Metallrohrs (30) erlaubt.

5. Fühler nach einem der vorhergehenden Ansprüche, wobei die Austauscheinrichtung (40) eine Öffnung ist, die mit einem Filterelement (50) versehen ist.

6. Fühler nach Anspruch 5, wobei das Filterelement (50) sich in der Öffnung befindet.

7. Fühler nach Anspruch 5, wobei das Filterelement (50) ein Ende der Öffnung bedeckt.

8. Fühler nach einem der Ansprüche 5 bis 7, wobei das Filterelement (50) aus porösem Material ist.

9. Fühler nach einem der Ansprüche 5 bis 8, wobei das Filterelement (50) wasserabweisende Eigenschaften besitzt.

10. Fühler nach einem der Ansprüche 5 bis 9, wobei das Filterelement (50) ölabweisende Eigenschaften besitzt.

11. Fühler nach einem der Ansprüche 6 bis 10, wobei das Filterelement (50) aus einem Material auf der Basis von Polytetrafluorethylen (PTFE) ist.
